# EUROPEAN PATENT SPECIFICATION

(11) **EP 2 826 131 B1**
(45) Date of publication and mention of the grant of the patent: **10.08.2016**
(21) Application number: 13733222.7
(22) Date of filing: 18.06.2013
(51) Int. Cl.: H02K 1/14, H02K 15/02

(54) **LAMINAR SEGMENT FOR ELECTRIC MOTOR SEGMENTED STATOR**
BLECHSEGMENT FÜR DEN SEGMENTIERTEN STATOR EINES ELEKTROMOTORS
SEGMENT LAMINAIRE POUR STATOR SEGMENTÉ DE MOTEUR ÉLECTRIQUE

(30) Priority: 29.06.2012 BR 102012016288
(43) Date of publication of application: 21.01.2015
(73) Proprietor: Whirlpool S.A., 04578-000 São Paulo - SP (BR)
(72) Inventor: FELDMANN, Alberto Bruno, 89221-570 Joinville - SC (BR); ESPÍNDOLA, Aleandro Amauri de, 89218-600 Joinville - SC (BR); LINK, Rodrigo, 89204-430 Joinville - SC (BR)
(74) Representative: Soldatini, Andrea
(86) International application number: PCT/BR2013/000215
(87) International publication number: WO 2014/000070

(56) References cited:
- DE-A1-102008 057 390
- JP-A- 2000 069 693
- JP-A- 2009 247 169
- JP-A- 2009 254 086
- US-A1- 2004 201 303

## Description

### Field of the Invention

The present invention refers to the technology of electric motor and similar equipments.

The present invention generally relates to a laminar segment for electric motor segmented stator and, more particularly, to the geometry and/or format of said laminar segment for electric motor segmented stator.

### Background of the Invention

It is already known by those skilled in the art that electric motors comprise machines capable of converting electric energy to mechanic energy.

Generally speaking, and according to specialized academic publications, electric motors comprise fixed inductive cores and mobile inductive cores, and have their main functional principle based on electromagnetic induction principles, where magnetic fields generated by the fixed inductive cores are capable of generating movement in the mobile inductive cores. In this sense, it is also known by those skilled in the art that the fixed inductive cores are disclosed in the stator while the mobile inductive cores are arranged in the rotor.

From the constructive point of view, an electric motor stator is essentially composed of a metal frame and a plurality of coils (electric conductors disposed in a manner surrounding a shaft), wherein said coils are disposed in alignment with the metal frame.

In this sense, and as known by those skilled in the art, a stator package of an electric motor can be obtained from a metal monoblock from a plurality of metal blades, or also from a plurality of metal blade segments. This latter type of stator is named segmented stator.

The main advantages of a segmented stator over a monoblock stator or a laminar stator are particularly perceivable when analyzed from an industrial point of view. This mainly occurs due to raw material savings since laminar segments can be obtained from an essentially thin metal blade in stamping processes because blade formats allow for spaces between the segments to be reduced. Furthermore, with regard to the cases where a rotor core is not formed of blades, according to BR Patent Application PI0905651-3, material savings are increased. The second advantage provided by the use of laminar segments refers to improvement in winding process since access to the groove remains totally free, thereby enhancing the accuracy to guide a yarn around each coil winding, thereby making it possible to carry out the concentrate yarn winding process and, consequently, to add a higher number of turns and/or higher volume of coil material to one same groove area.

Examples of laminar segments as well as examples of segmented stators are disclosed in EP 1364442, JP 2020141942, US 7414347, US 7471025, US 7821175, and CN 201008100.

EP 1364442 and US 7414347 describe in a simplified form stator segments formed of multiple laminar segments. Each of said laminar segments has a contour analogous to a T-shape wherein a substantially horizontal portion further comprises a side recess and a side protrusion, both oppositely disposed to form self-coupling "male-female" members and specially intended to join the stator segments.

With regard to JP 2010141942 and US 7471025 describe examples of geometries of laminar segments. In addition, such documents also teach blade matrices, from which said laminar segments are removed (using stamping processes).

US 7821175 and CN 201008100 in turn disclose segmented stators formed by physical association of stator segments. In both documents, it is also common to see that physical association of stator segments provides for the use of external structures, such as, for example, ring-shaped structures.

Although the above-mentioned documents only illustrate examples of embodiments pertaining to the state of the art, it can be clearly noted that most of the currently existing segmented stators include fundamental aspects disclosed in such examples. From this observation the main drawbacks referring to these examples and, consequently, presented in most of currently existing segmented stators are easily verified.

The first drawback refers to a constructive point of view. As disclosed in JP 2010141942 and US 7471025, it is observed that the current blade matrices in function of the geometry of the laminar segments generate high amount of metal scrap. This is due to the fact that said geometry of the laminar segments aims at generating higher functional efficiency to the stator and not a smaller amount of scrap.

The second drawback refers to stator assembly and/or arrangement. US 7821175 and CN 201008100 teach that the stator assembly requires the use of external structures which add dimensions to said stator.

Additionally, it is also known the documents JP 2009247169 and JP 2009254086, which may be considered the most relevant prior art documents to the present invention.

Said document JP 2009247169 discloses a laminar segment for electric motor segmented stator comprising at least an external segment and at least a tooth, said laminar segment comprising: two first side ends (left and right faces of the upper trapezoid, which is a yoke segment) projected from each of said side ends of the external segment; and two second side ends (left and right faces of the lower trapezoid, which is a pole shoe) projected from each of said lower sides ends of perpendicular segment of the tooth.

In this document, however, said first and second side ends of consecutive (on a blade strip) "I-shaped profile" laminar segments are "laterally" adjacent. In other words, a first face (right, for instance) is coincidently disposed "beside" a second face (left, for instance).

Said document JP 2009254086, in turn, discloses a configuration even more similar to the one of the present invention, however, its cooperating right and left faces of the consecutive laminar segments are not coincident, defining, therefore, a space (gap) between said faces. Furthermore, said left and right faces of the laminar segment disclosed by JP 2009254086 are not parallel between themselves (left with left and right with right), since said left and right faces disposed on the external segment are slightly curved. So, even considering its symmetry about its longitudinal axis, said shape could not allow, in any way, a stamping according to the present invention, as detailed below.

In this sense, it is noticed that the subject of documents JP 2009247169 and JP 2009254086 comprise the already cited issue of raw material waste generation during the manufacture of laminar segments.

The present invention has been developed based on this scenario.

### Objects of the invention

Hence, an object of the present invention is to provide a laminar segment for electric motor segmented stator having geometry capable of reducing the amount of scrap (raw material optimization) without impairing electric efficiency of said motor. Another object of the present invention is to provide a laminar segment for electric motor segmented stator that has the ability to use aluminum thread in the composition of its coil.

### Summary of the Invention

These and other objects of the present invention are achieved by means of a laminar segment for electric motor segmented stator, which comprises at least an external segment and at least a perpendicular segment called tooth, in addition to containing two side ends projected from each of the side ends of the external segment (that after joining said segments in the assembly is named crown), and two side ends projected from each of said lower ends of the tooth. Said side ends have right faces substantially parallel therebetween and left faces also substantially parallel therebetween. Preferably, one of said side ends further comprises a coupling projection while the other side end comprises a coupling recess.

In accordance with the principles and objects of the present invention, the right faces have an angular inclination complementary to the angular inclination of the left faces, wherein such geometry allow to define in one same blade matrix multiple laminar segments, which have their side ends resting against one another so they can be separated from one another through linear cuts, providing an optimization at reducing raw material waste.

It should be pointed out that, in accordance with the present invention, said electric motor having a segmented stator comprises electric coils made of aluminum.

### Brief Description of Drawings

The present invention will be described in detail based on the figures listed below, wherein:
Fig. 1 illustrates a laminar segment for the electric motor segmented stator in accordance with the present invention;
Fig. 2 illustrates laminar segments for the electric motor segmented stator in the blade matrix disposed at the blade matrix in accordance with the present invention; and
Fig. 3 illustrates laminar segments for the segmented stator in the stator package itself.

### Detailed Description of the Invention

As previously mentioned, one of the main objects of the present invention is to provide laminar segments (that in conjunction form segments for electric motor segmented stators) which can be obtained/made of an optimized amount of raw material (metal blades and/or sheets).

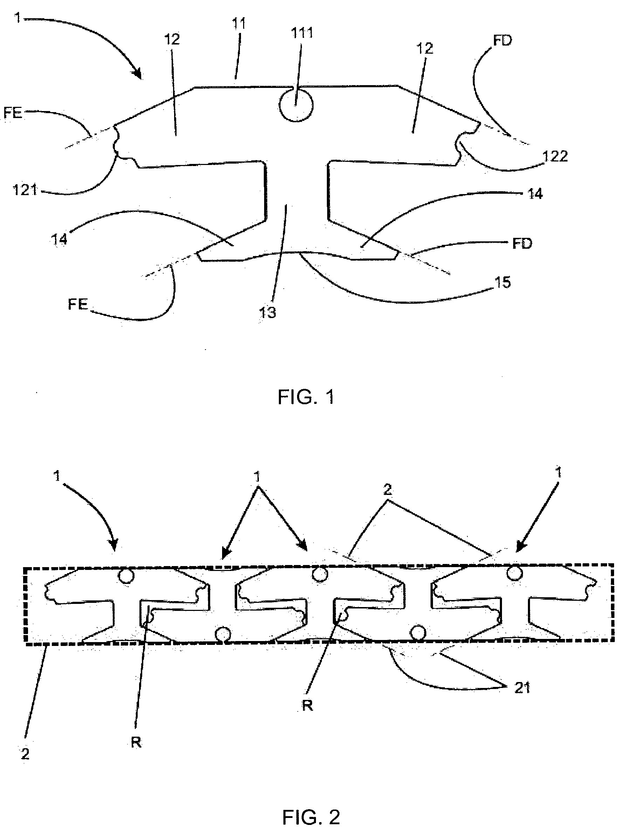

In this sense, and in accordance with the present invention, a laminar segment 1 that is depicted in Figure 1 in an amplified form is disclosed.

Said laminar segment 1 that has geometry essentially analogous to letter T is essentially constituted by an external segment 11 and a tooth 13, wherein said external segment 11 corresponds to the horizontal portion of the T-shaped geometry; and said tooth 13 corresponds to the vertical portion of said T-shaped geometry. Attention should be drawn to the fact that laminar segments having T-shaped geometry are widely known by those skilled in the art.

The presently disclosed laminar segment 1 is shown to have two end sides 12 projected from each of the side ends of the external segment 11 and two side ends 14 projected from each of said lower side ends of tooth 13.

As can be seen from Fig. 1, it is essentially required that said side end 12 and said side end 14 of opposite sides of one same laminar segment 1 have substantially parallel faces therebetween.

Additionally, as shown in Figure 2, and according to a preferred embodiment of the laminar segment 1, an optimized geometry aiming at reducing raw material is obtained when said side ends 12 and side ends 14 have right faces FD substantially parallel therebetween, and when said side ends 12 and said side ends 14 comprise left faces FE substantially parallel therebetween.

It is then observed that, in accordance with the preferred embodiment of the laminar segment 1, the right faces FD have an angular inclination complementary to the angular inclination of the left faces FE, wherein the reverse is evidently true.

Such geometry permit to define in one same blade matrix 2 multiple laminar segments 1, which segments have their side ends 12 and 14 "resting" against one another. It is then verified that said laminar segments 1 (of one same blade matrix 2) can be "separated" from one another through linear cuts 21 (virtual lines). Generation of raw material scrap R in accordance with the laminar segment 1 is significantly smaller than the generation of scrap relative to laminar segments pertaining to the state of the art.

Preferably, in accordance with a now detailed preferred embodiment, the multiple laminar segments 1 are defined in one same blade matrix 2, and "separated" from each other by means of conventional stamping processes, which are usually carried out in presses.

Further, as illustrated in Fig. 1, it is observed that preferably each laminar segment 1 additionally comprises a circular face 15 that is defined at the lower end of its tooth 13. However, and in a further preferred form, it is further verified that the external segment 11 of the laminar segment 1 has also a centrally disposed through-hole 111.

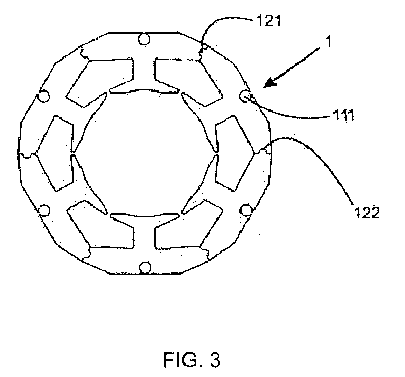

Moreover, in an optional form, it should be cited that one of said side ends 12 (according to the attached figures, left side end 12) also comprises a coupling projection 121 whereas the other side end 12 (according to the attached figures, left right side end 12) also comprises a coupling recess 122. Coupling projections 121 and coupling recesses 122 assist laminar segments 1 to be joined, as depicted in Figure 3.

Still in accordance with Fig. 3, it can be noted that said laminar segments 1 in accordance with the present invention can be joined to one another to thereby define the structural portion of stator E.

One of the advantages presented by using segmented stators refers to the possibility of winding metal conductors 5 (electric coil) around multiple teeth 13 of the (duly joined) multiple laminar segments 1 before the final mounting of the stator E itself.

It should be pointed out that in accordance with the present invention laminar segments 1 of the presently disclosed stator E preferably use metal conductors 5 made of aluminum.

Having described the preferred embodiment of the present invention, it should be understood that the scope thereof contemplates other possible variations, which are only limited by the contents of the appended claims, including possible equivalent means.

## Claims

1. Laminar segment for electric motor segmented stator, comprising at least a yoke (11) and at least a tooth (13), wherein:
the yoke (11) comprises a first pair of side ends (12) that extend outwardly from the yoke (11) center and an outer straight edge;
the tooth (13) comprises a perpendicular segment extending perpendicularly from the yoke (11) and a lower end with a lower straight edge;
the outer straight edge and the lower straight edge being parallel therebetween;
a second pair of side ends (14) extending outwardly from the perpendicular segment of the tooth (13);
a first side end of the first pair of side ends (12) comprises a first right edge (FD);
a first side end of the second pair of side ends (14) comprises a second right edge (FD);
a second side end of the first pair of side ends (12) comprises a first left edge (FE);
a second side end of the second pair of side ends (14) comprises a second left edge (FE);
wherein the first side end of the first pair of side ends (12) and the second side end of the first pair of side ends (12) are adjacently disposed to the outer straight edge of the yoke (11);
wherein the first side end of the second pair of side ends (14) and the second side end of the second pair of side ends (14) are adjacently disposed to the perpendicular segment of the tooth (13);
the first and second right edges (FD) are substantially parallel therebetween;
the first and second left edges (FE) are substantially parallel therebetween;
said laminar segment **characterized in that**:
the first right edge (FD) and the first left edge (FE) of the respective first and second side ends of the first pair of side ends (12) comprise respective obtuse angular inclination in relation to the outer edge of the yoke (11);
the second right edge (FD) and the second left edge (FE) of the respective first and second side ends of the second pair of side ends (14) comprise respective acute angular inclinations in relation to the lower edge of the tooth (13);
wherein the obtuse angular inclinations of the first right edge (FD) and of the first left edge (FE) are respectively supplementary to the acute angular inclinations of the second right edge (FD) and the second left edge (FE);
wherein such geometry permits to define in one same lamination sheet (2) multiple laminar segments (1), which have their first and second pairs of side ends (12, 14) resting against one another so they can be separated from one another through linear cuts (21), providing an optimization at reducing raw material waste.

2. Laminar segment, in accordance with claim 1, **characterized in that** each laminar segment (1) comprises a circular face (15) disposed between the first and second side ends of the second pair of side ends (14).

3. Laminar segment, in accordance with claim 1, **characterized in that** said yoke (11) further comprises a through-hole (111).

4. Laminar segment, in accordance with claim 1, **characterized in that** one of the said first or second side ends of the first pair of side ends (12) further comprises a coupling projection (121).

5. Laminar segment, in accordance with claim 1, **characterized in that** one of the first and second side ends of the first pair of side ends (12) further comprises a coupling recess (122).

6. Laminar segment, in accordance with claim 1, **characterized in that** it comprises electric coils (5) made of aluminum.

## Patentansprüche

1. Laminarsegment für den segmentierten Stator eines Elektromotors, enthaltend wenigstens ein Joch (11) und wenigstens einen Zahn (13), wobei:
das Joch (11) ein erstes Paar von Seitenenden (12), die sich auswärts von dem Zentrum des Jochs (11) erstrecken, und einem äußeren geraden Rand enthält;
der Zahn (13) ein senkrechtes Segment, das sich senkrecht von dem Joch (11) erstreckt, und ein unteres Ende mit einem unteren geraden Rand enthält;
der äußere gerade Rand und der untere gerade Rand untereinander parallel sind;
ein zweites Paar von Seitenenden (14) sich von dem senkrechten Segment des Zahns (13) auswärts erstreckt;
ein erstes Seitenende des ersten Paares von Seitenenden (12) einen ersten rechten Rand (FD) enthält;
ein erstes Seitenende des zweiten Paares von Seitenenden (14) einen zweiten rechten Rand (FD) enthält;
ein zweites Seitenende des ersten Paares von Seitenenden (12) einen ersten linken Rand (FE) enthält;
ein zweites Seitenende des zweiten Paares von Seitenenden (14) einen zweiten linken Rand (FE) enthält;
wobei das erste Seitenende des ersten Paares von Seitenenden (12) und das zweite Seitenende des ersten Paares von Seitenenden (12) benachbart am äußeren geraden Rand des Jochs (11) angeordnet sind;
wobei das erste Seitenende des zweiten Paares von Seitenenden (14) und das zweite Seitenende des zweiten Paares von Seitenenden (14) benachbart am senkrechten Segment des Zahns (13) angeordnet sind;
die ersten und die zweiten rechten Ränder (FD) im Wesentlichen untereinander parallel sind;
die ersten und die zweiten linken Ränder (FE) im Wesentlichen untereinander parallel sind;
wobei das Laminarsegment **dadurch gekennzeichnet ist, dass**:
der erste rechte Rand (FD) und der erste linke Rand (FE) der jeweiligen ersten und zweiten Seitenenden des ersten Paares von Seitenenden (12) eine jeweilige stumpfe Winkelneigung in Relation zum äußeren Rand des Jochs (11) haben;
der zweite rechte Rand (FD) und der zweite linke Rand (FE) der jeweiligen ersten und zweiten Seitenenden des zweiten Paares von Seitenenden (14) entsprechende spitze Winkelneigungen in Relation zum unteren Rand des Zahnes (13) haben;
wobei die stumpfen Winkelneigungen des ersten rechten Randes (FD) und des ersten linken Randes (FE) jeweils ergänzend zu den spitzen Winkelneigungen des zweiten rechten Randes (FD) und des zweiten linken Randes (FE) sind;
wobei es eine solche Geometrie gestattet, in ein und demselben Laminarblech (2) mehrere Laminarsegmente (1) zu definieren, bei denen ihre ersten und zweiten Paare von Seitenenden (12, 14) gegeneinander anliegen, so dass sie durch lineare Schnitte (21) voneinander getrennt werden können,
was für eine Optimierung beim Reduzieren einer Verschwendung von Rohmaterial sorgt.

2. Laminarsegment nach Anspruch 1, **dadurch gekennzeichnet, dass** jedes Laminarsegment (1) eine kreisartige Seite (15) hat, die zwischen den ersten und zweiten Seitenenden des zweiten Paares von Seitenenden (14) angeordnet ist.

3. Laminarsegment nach Anspruch 1, **dadurch gekennzeichnet, dass** das Joch ferner ein Durchgangsloch (111) enthält.

4. Laminarsegment nach Anspruch 1, **dadurch gekennzeichnet, dass** eines der ersten oder zweiten Seitenenden des ersten Paares von Seitenenden (12) ferner einen Kopplungsvorsprung (121) enthält.

5. Laminarsegment nach Anspruch 1, **dadurch gekennzeichnet, dass** eines der ersten und zweiten Seitenenden des ersten Paares von Seitenenden (12) ferner eine Kopplungsausnehmung (122) enthält.

6. Laminarsegment nach Anspruch 1, **dadurch gekennzeichnet, dass** es elektrische Wicklungen (5) enthält, die aus Aluminium bestehen.

## Revendications

1. Segment laminaire pour stator segmenté de moteur électrique, comprenant au moins une embase en forme de joug (11) et au moins une dent (13), dans lequel :
l'embase (11) comprend une première paire d'extrémités latérales (12) qui s'étendent vers l'extérieur à partir du centre de l'embase (11) et un bord droit extérieur ;
la dent (13) comprend un segment perpendiculaire s'étendant perpendiculairement à partir de l'embase (11) et une extrémité inférieure avec un bord droit inférieur ;
le bord droit extérieur et le bord droit inférieur étant parallèles entre eux ;
une seconde paire d'extrémités latérales (14) s'étendant vers l'extérieur à partir du segment perpendiculaire de la dent (13) ;
une première extrémité latérale de la première paire d'extrémités latérales (12) comprend un premier bord de droite (FD) ;
une première extrémité latérale de la seconde paire d'extrémités latérales (14) comprend un deuxième bord de droite (FD) ;
une seconde extrémité latérale de la première paire d'extrémités latérales (12) comprend un premier bord de gauche (FE) ;
une seconde extrémité latérale de la seconde paire d'extrémités latérales (14) comprend un second bord de gauche (FE) ;
dans lequel la première extrémité latérale de la première paire d'extrémités latérales (12) et la seconde extrémité latérale de la première paire d'extrémités latérales (12) sont disposées de façon adjacente au bord droit extérieur de l'embase (11) ;
dans lequel la première extrémité latérale de la seconde paire d'extrémités latérales (14) et la seconde extrémité latérale de la seconde paire d'extrémités latérales (14) sont disposées de façon adjacente au segment perpendiculaire de la dent (13) ;
les premier et second bords de droite (FD) sont sensiblement parallèles entre eux ;
les premier et second bords de gauche (FE) sont sensiblement parallèles entre eux ;
ledit segment laminaire étant **caractérisé en ce que** :
le premier bord de droite (FD) et le premier bord de gauche (FE) des première et seconde extrémités latérales respectives de la première paire d'extrémités latérales (12) font respectivement des angles obtus avec le bord extérieur de l'embase (11) ;
le second bord de droite (FD) et le second bord de gauche (FE) des première et seconde extrémités latérales respectives de la seconde paire d'extrémités latérales (14) font respectivement des angles aigus avec le bord inférieur de la dent (13) ;
dans lequel les angles obtus faits par le premier bord de droite (FD) et le premier bord de gauche (FE) sont respectivement supplémentaires aux angles aigus faits par le second bord de droite (FD) et le second bord de gauche (FE) ;
dans lequel une telle géométrie permet de définir, dans une même seule feuille de laminage (2), de multiples segments laminaires (1), qui ont leurs première et seconde paires d'extrémités latérales (12, 14) maintenues l'une contre l'autre de façon qu'elles peuvent être séparées l'une de l'autre par des coupes linéaires (21), produisant une optimisation de la diminution de la quantité de déchets de matériau brut.

2. Segment laminaire, en accord avec la revendication 1, **caractérisé en ce que** chaque segment laminaire (1) comprend une face circulaire (15) disposée entre les première et seconde extrémités latérales de la seconde paire d'extrémité latérales (14).

3. Segment laminaire, en accord avec la revendication 1, **caractérisé en ce que** ladite embase (11) comprend en outre un orifice traversant (111),

4. Segment laminaire, en accord avec la revendication 1, **caractérisé en ce que** l'une des dites première ou seconde extrémités latérales de la première paire d'extrémités latérales (12) comprend en outre un bossage de couplage (121).

5. Segment laminaire, en accord avec la revendication 1, **caractérisé en ce que** l'une des première et seconde extrémités latérales de la première paire d'extrémités latérales (12) comprend en outre une cavité de couplage (122).

6. Segment laminaire, en accord avec la revendication 1, **caractérisé en ce qu'**il comprend des bobines électriques (5) en aluminium.
